# EUROPEAN PATENT APPLICATION

(11) **EP 4 425 116 A1**
(43) Date of publication of application: **04.09.2024**
(21) Application number: 24156346.9
(22) Date of filing: 07.02.2024
(51) Int. Cl.: G01F 25/10, G01F 1/07, G01F 15/00, G01F 15/063, H02K 7/18, G01F 15/075, G01F 1/075, G01F 1/115

(54) **CONTROL SYSTEM**

(30) Priority: 03.03.2023 IT 202300003933
(71) Applicant: Celano, Biase, 80078 Pozzuoli Napoli (IT)
(72) Inventor: Celano, Biase, 80078 Pozzuoli Napoli (IT)
(74) Representative: Puggioli, Tommaso

(57) **Abstract**

Described is a system (100) for controlling a flow (F) comprises a control and measurement unit (1) comprising a duct (2) for passage of the flow (F) and a flow rate measuring device (3) equipped with a measurement sensor (4) configured to generate information (I) signifying the flow (F); the control and measurement unit (1) comprises an electronic card (5) in communication with the flow rate measuring device (3), a transceiver unit (6) in communication with or integrated in the electronic card (5) and a power supply unit (8) of the electronic card (5); the power supply unit (8) comprises an electricity generator (9) comprising an impeller (10) inserted in the duct (2) for being actuated by the flow (F), at least one magnet supported by the impeller (10) and an inductor (11) coupled to the impeller (4) outside the duct; the electricity generator (9) recovers energy from the flow (F) by means of the impeller (10) and the power supply unit (8) comprises an accumulator (12) in communication with the electricity generator (9) for storing at least a part of the energy recovered from the flow (F).

## Description

This invention relates to a control system and in particular a system for remote control and remote reading of flows which can be used, for example, in drinking water plants.

There are prior art flow meters equipped with devices for transmitting the data measured, such as, for example, that described in document US5721383, or devices also configured for signalling any faults and intervening on the flow monitored, such as that described in document US6323774.

A drawback of the prior art systems is the need for an electricity supply from the network or by means of batteries which limit the autonomy and the versatility, making them not very practical.

For this reason, the need to control and adjust these flows in a practical manner remains unresolved in the sector of flow control systems.

In this context, the aim is to provide a flow control system which is able to satisfy the above-mentioned need.

In particular, the aim of this invention is to provide a flow control system which is versatile and autonomous from an energy point of view.

This aim is achieved by a flow control system comprising the technical features described in one or more of the accompanying claims. The dependent claims correspond to possible different embodiments of the invention.

According to a first aspect, this invention relates to a flow control system. The control system comprises a control and measurement unit which may, for example, be applied upstream of a civil water supply preferably combined with the water meter.

The control and measurement unit comprises a duct for the passage of the flow to be monitored and a flow rate measuring device for measuring the flow in the duct. The duct may, for example, be inserted in series with the water supply, upstream or downstream of the meter. According to an embodiment, the duct may comprise a traditional meter inserted between the relative inlet and the relative outlet.

The flow rate measuring device comprises a measurement sensor configured for generating significant flow rate information.

The control and measurement unit comprises an electronic control card in communication with the flow rate measuring device to receive at least the significant information of the flow rate in the duct.

The traditional meter can be integrated in the control and measurement unit. The electronic card may form significant information of the flow also by acquiring the measurement from the meter in a substantially known manner.

The control and measurement unit comprises a transceiver unit in communication with or integrated in the electronic card configured at least for transmitting the significant information of the flow in the duct, for example to a remote server which may be managed by the control system manager.

The control and measurement unit comprises a power supply unit for powering at least the electronic card.

The power supply unit comprises an electricity generator comprising an impeller inserted in the duct to be driven by the flow, a magnet supported by the impeller and an inductor coupled with the impeller outside the duct. The electricity generator recovers energy from the flow by means of the rotor and the power supply unit comprises an accumulator, comprising, for example, a capacitor, in communication with the electricity generator for storing at least a part of the energy recovered from the flow.

The control and measurement unit may comprise a solenoid valve for closing the duct which is movable between a closed position of the duct, in which the flow is interrupted, and an open position in which the flow may pass through the duct.

The solenoid valve is in communication and preferably controlled by the electronic card.

The electronic card is preferably configured to receive an instruction, for example by means of the transceiver unit, and control the solenoid valve as a function of the instruction.

Advantageously, the solenoid valve may adopt all the intermediate positions between the maximum opening and the closing, therefore also only choking the flow in the duct.

The control and measurement unit can comprise a buffer battery for powering at least the electronic card for compensating a lack of energy in the case of an interruption of the flow.

Preferably, the flow rate measuring device comprises the impeller of the electricity generator and the measurement sensor is installed on the impeller.

In particular, the measurement sensor coincides preferably with the magnet but it can also be two separate components.

In accordance with a second aspect, this invention relates to a method for managing a flow using a control system of the above-mentioned type.

The management method comprises measuring the flow rate by means of the impeller of the electricity generator, for example by counting the inversions of the magnetic field in the duct due to the rotation of the magnet together with the impeller.

The management method comprises powering the control and measurement unit by means of the power supply unit.

Preferably, the electronic card controls the solenoid valve on the basis of a machine learning algorithm which may or may not be monitored. In that sense, the electronic card is programmed with an expert system. For example, the algorithm for controlling the solenoid valve may learn, in a learning step which may form part of the method, from a data set already labelled and with a predetermined output.

In practice, a plurality of sets of parameters, for example inlet pressure, outlet pressure, maximum amplitude of the magnetic field, inversion speed and temperature, are associated with respective quantities of water measured in the duct in one or more bench test applications.

Alternatively or in combination, the expert system can be trained with a profile of the consumptions as a function of the flow measurements in the duct measured by the flow rate measuring device.

Advantageously, in general, the information is processed by the electronic card in such a way that an aggregate data is transmitted so as to reduce to a minimum the consumption of the control and measurement unit. Preferably, measuring the flow rate using the impeller of the electricity generator comprises compensating the measurement obtained as a function of an absorption of the electricity generator.

Preferably, the control system may periodically send aggregate data and put itself in a mode of waiting for commands which can arrive from the server.

The control system allows both the flow in the duct to be read and choked and may be, for example, used in the control of civil supplies together with the water meter which may be integrated in the control system. Advantageously, for example, it is possible to control the solenoid valve by means of the electronic card in such a way as to choke the flow in the duct.

According to current legislation, in Italy, it is prohibited to interrupt the supply of water for residential use. The control of the solenoid valve allows the current regulations to be complied with, for example guaranteeing a minimum delivery per person in the event of late payment.

For example, the system could deliver an average amount of water that meets legal requirements over a period of 24 hours.

The control system and the relative management method allow the flow to be monitored and to identify any abnormal operations, for example linked to losses or improper uses.

The control system may be equipped with an alarm system to signal any tampering of the system, for example a locking of the rotor to inhibit the measurement of the flow or the application of a magnetic field such as to hide the movement of the magnet.

Advantageously, any automatic learning of the control system allows, for example, a predictive assessment of any faults.

The system may have at least two modes of operation, reading and intervention of the valve.

The system is, for example, advantageously applied in condominiums where the dispensing body cannot interrupt the supply to the entire building, so the device according to the invention allows, remotely, the flow to the individual housing unit to be adjusted in the event of late payments. The system is able to regulate the flow rate itself without having to continuously communicate with the remote server or a central station; it connects regularly to communicate the consumption details and ask whether there are commands by which it can, if necessary, change its operating mode.

If, for example, the flow rate measuring device starts to detect a flow during a time in which it normally does not occur, thereby leaving the consumption profile for the user, the system can generate an alarm.

Further features and advantages of the above-mentioned aspects are more apparent in the non-limiting description which follows of a preferred non-limiting embodiment of a system for controlling a flow and a method for managing a flow and in particular a system for remote control and remote reading of flows which can be used, for example, in drinking water plants.

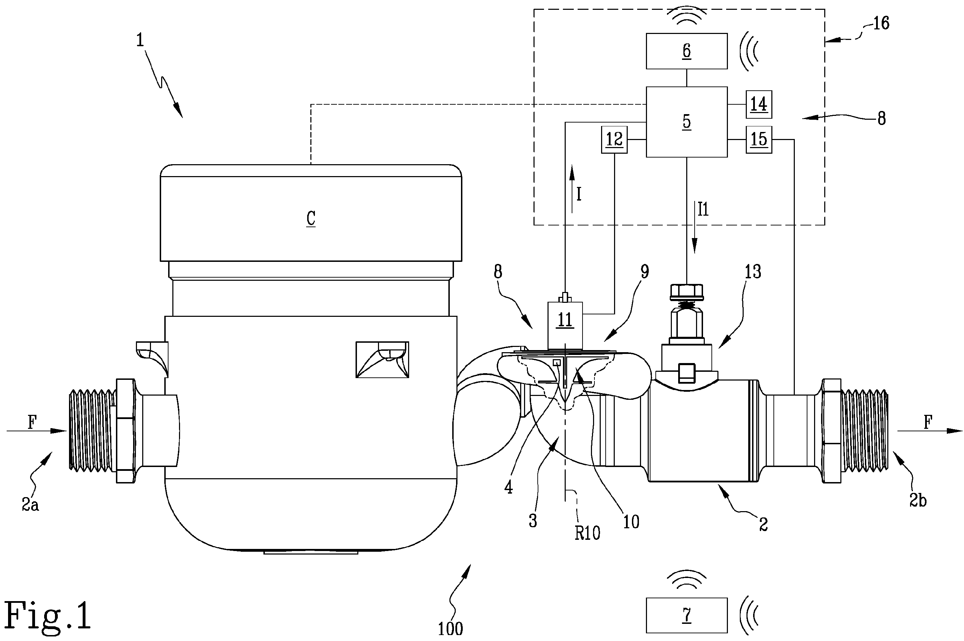

The description is set out below with reference to the accompanying drawing, which is provided solely for purposes of illustration without restricting the scope of the invention and which illustrates a system for controlling a flow according to the invention in a schematic view partly in blocks.

With reference to the accompanying drawing, the numeral 100 denotes a system for controlling a flow F in accordance with the invention which will be described below only insofar as necessary for understanding this invention.

The control system 100 comprises a control and measurement unit denoted in its entirety by the numeral 1.

The control and measurement unit 1 comprises a duct 2, having an inlet 2a and an outlet 2b, for the passage of the flow F to be monitored.

The inlet 2a and the outlet 2b are threaded in known manner so that they can be inserted in a line for supplying a liquid not illustrated.

The control and measurement unit 1 comprises a flow rate measuring device 3 for measuring the flow F in the duct 2.

According to the embodiment illustrated, the duct 2 comprises a meter C, of known type and not described in detail, inserted in the inlet 2a and the outlet 2b.

According to alternative embodiments, the duct 2 does not comprise the meter C which may be, for example, that of the housing unit in which the control and measurement unit 1 is installed and to which the duct 2 is inserted in series.

The flow rate measuring device 3 comprises a measurement sensor 4 configured to generate significant information I of the flow.

The control and measurement unit 1 comprises an electronic control card, comprising a microcontroller and schematically illustrated as a block 5, in communication with the flow rate measuring device 3 to receive at least the significant information of the flow in the duct.

According to the embodiment illustrated, the electronic card 5 is in communication with the meter C and may form significant information of the flow also by acquiring the measurement from the meter in a substantially known manner.

The control and measurement unit 1 comprises a transceiver unit, schematically illustrated with a block 6, in communication with or integrated in the electronic card 5.

The transceiver unit 6 is preferably made with low consumption technologies, for example LoRa and/or NB-loT.

The transceiver unit preferably comprises a near data transmission device, not illustrated, based for example on NFC (*Near Field Communication*) and/or BLE (*Bluetooth Low Power*) technologies.

The transceiver unit 6 is configured at least for transmitting the information I to a remote server, schematically illustrated as a block 7, which may be managed by the controller of the control system 100.

The control and measurement unit 1 comprises a power supply unit 8 for powering at least the electronic card 5.

The power supply unit 8 comprises an electricity generator 9 comprising an impeller 10 rotatable about an axis R10.

A magnet is supported by the impeller 10 and movable with it; the magnet is denoted by the reference numeral 4 as it preferably constitutes the measurement sensor of the flow rate measuring device 3.

According to alternative embodiments, the magnet and the measurement sensor are made as separate components.

The power supply unit comprises an inductor 11, combined with the rotor 10, preferably positioned outside the duct 2.

The rotor 10 is inserted in the duct 2 to be driven by the flow F and, schematically, the inductor 11, by virtue of the variation of the magnetic field due to the rotation of the magnet 4, generates electricity which is used for the operation of the control and measurement unit 1; the electricity generator 9 recovers energy from the flow F by means of the rotor 10.

The power supply unit 8 comprises an accumulator, schematically illustrated with a block 12, comprising, for example, a capacitor, in communication with the electricity generator 9 for storing at least a part of the energy recovered from the flow F.

The control and measurement unit 1 comprises a solenoid valve 13 for closing the duct 2 which is movable between a closed position of the duct 2, in which the flow is interrupted, and an open position in which the flow F may pass through the duct 2.

The solenoid valve 13 is an example of a mechanical actuator which is able to choke the flow F.

The solenoid valve 13 is in communication and preferably controlled by the electronic card 5.

The electronic card 5 is configured to receive an instruction I1 and control the solenoid valve 13 as a function of said instruction 11, that is to say, transmitting the instruction I1 to the solenoid valve 13.

For example, the instruction I1 may be provided to the electronic card 5 by means of the transceiver unit 6.

The transceiver unit 6 is configured to receive at least the instruction I1, for example coming from the manager of the control system 100, and transmitting it to the electronic card 5.

According to the embodiment illustrated, the control and measurement unit 1 comprises a buffer battery, schematically illustrated as a block 14, for powering at least the electronic card 5 for compensating a lack of energy in the case of an interruption of the flow F.

The control and measurement unit 1 comprises a temperature difference detector, for example a Peltier cell, schematically illustrated as a block 15. The temperature difference detector is operating between the duct 2 and the electronic card 5 and in communication with the electronic card 5. Preferably, the control and measurement unit 1 comprises a casing 16, schematically illustrated with a dashed line, and the main components of the control and measurement unit 1 can be enclosed in the casing 16. The temperature difference detector 15 may also be positioned between the casing 16 and the duct 2 for detecting the temperature difference between them.

In the presence of the flow F which cools the duct 2, there is a temperature difference between the duct 2 and the electronic card 5 and/or the casing 16 whilst in the absence of the flow F, under steady-state conditions, the duct 2 and the electronic card 5 and/or the casing 16 have the same temperature.

In practice, the temperature difference detector 15 can detect the presence of flow F in the duct 2 irrespective of the flow rate measuring device 3. It is therefore possible, for example, to identify a malfunction or tampering of the flow rate measuring device 3 if the respective signals are not consistent with each other.

According to the preferred embodiment illustrated, the electronic card comprises an expert system as a function of a plurality of measurements performed by the flow rate measuring device 3 in situ and/or in a test application.

A method for managing the flow F using a control system 100 comprises measuring the flow rate F by means of the impeller 10 of the electricity generator 9, for example by counting the inversions of the magnetic field in the duct 2 due to the rotation of the magnet 4 together with the impeller 10.

The power supply unit 8 powers the control and measurement unit 1.

The electronic card 5 controls the solenoid valve 13 on the basis of a machine learning algorithm which may or may not be monitored.

The control and measurement unit 1, by means of the microcontroller of the electronic card 5, is programmed as an expert system (in a computer sense).

The expert system is trained with a labelled data set, for example after a training campaign in the laboratory, on a bench and/or by means of a measurement campaign once the control and measurement unit 1 is installed, for example, in an apartment to obtain a profile of the consumptions.

In general, the solenoid valve 13 is controlled on the basis of an automatic learning algorithm and the control system 100 makes it possible to manage the flow F as needed.

The management method comprises, for example, generating an alarm if a flow F in the duct 2 is measured which is not consistent with the consumption profile.

Preferably, the management method comprises compensating the measurement obtained by the flow rate measuring device 3 as a function of an absorption of the electricity generator 9.

In general, advantageously, the management method comprises processing the information I by means of the microcontroller of the electronic card 5 in such a way that the control and measurement unit 1 sends to the remote server 7 an aggregate data. In this way, the energy consumption of the control and measurement unit 1 is significantly reduced.

According to the management method, in order to save energy, the control and measurement unit 1, after sending the information I by means of the transceiver unit 6, moves to a standby configuration for receiving any instruction from the remote server 7.

## Claims

1. A system for controlling a flow (F) comprising
a control and measurement unit (1) comprising
- a duct (2) for passage of the flow (F);
- a flow rate measuring device (3) for measuring the flow (F) in the duct (2), said flow rate measuring device (3) comprising a measurement sensor (4) configured to generate information (I) signifying the flow (F), said control and measurement unit (1) comprising
- an electronic card (5) in communication with the flow rate measuring device (3) for receiving at least said information (I);
- a transceiver unit (6) in communication with or integrated in the electronic card (5) configured at least for transmitting said information (I), said control system being **characterised in that** said control and measurement unit (1) comprises
- a power supply unit (8) for powering at least said electronic card (5), said power supply unit (8) comprising an electricity generator (9) comprising an impeller (10) inserted in the duct (2) for being actuated by the flow (F), at least one magnet supported by the impeller (10) and an inductor (11) coupled to the impeller (4) outside the duct, said electricity generator (9) recovering energy from the flow (F) by means of said impeller (10), said power supply unit (8) comprising an accumulator (12) in communication with the electricity generator (9) for preserving at least a part of the energy recovered from the flow (F).

2. The control system according to claim 1, wherein the control and measurement unit (1) comprises a solenoid valve (13) for closing said duct (2) movable between a closed position of the duct (2), at which the flow (F) is interrupted and an open position at which the flow (F) can pass in the duct (2), said solenoid valve (13) being in communication with and controlled by said electronic card (5), said electronic card (5) being configured for receiving an instruction (11) and controlling the solenoid valve (13) as a function of said instruction (11).

3. The control system according to any one of the preceding claims, wherein the control and measurement unit (1) comprises a buffer battery (14) for powering at least the electronic card (5) for compensating a lack of energy in the case of an interruption of the flow (F).

4. The control system according to any one of the preceding claims, wherein said accumulator (12) comprises a capacitor.

5. The control system according to any one of the preceding claims, wherein the flow rate measuring device (3) comprises the impeller (10) of the electricity generator (10), said measurement sensor (4) being installed on said impeller (10).

6. The control system according to claim 5, wherein the measurement sensor (4) coincides with the magnet.

7. The control system according to any one of the preceding claims, wherein the control and measurement unit (1) comprises a temperature difference detector (15), for example a Peltier cell, operating between the duct (2) and the electronic card (5) and in communication with the electronic card (5).

8. The control system according to any one of the preceding claims, wherein the electronic card (5) comprises an expert system as a function of a plurality of measurements performed by the flow rate measuring device in situ and/or in a test application.

9. The control system according to any one of the preceding claims, wherein the control and measurement unit (1) comprises a buffer battery (14) for compensating a lack of energy if the flow (F) is closed and/or compensating a peak absorption of the solenoid valve (13).

10. The control system according to any one of the preceding claims, comprising at least one remote server (7) in communication with the control and measurement unit (1).

11. A method for managing a flow (F) using a control system (100) according to any one of the preceding claims comprising measuring the flow rate (F) using the impeller (10) of the electricity generator (9).

12. The management method according to claim 11, comprising powering the control system (100) using the power supply unit (8).

13. The management method according to claim 11 or 12, comprising measuring the flow (F) by counting the inversions of the magnetic field in the duct (F) due to the rotation of the magnet together with the impeller (10).

14. The method according to any one of claims 11 to 13, wherein the electronic card (5) drives the solenoid valve (13) on the basis of an automatic learning algorithm.

15. The method according to claim 14, wherein the automatic learning algorithm is supervised or not supervised.

16. The management method according to any one of claims 11 to 15, wherein measuring the flow rate (F) using the impeller (10) of the electricity generator (9) comprises compensating the measurement obtained as a function of an absorption of the electricity generator (9).

17. The management method according to any one of claims 11 to 16, comprising monitoring a temperature difference, for example with a Peltier cell, between the duct (2) and the electronic card (5).

18. The management method according to claim 17, comprising generating an alarm if a temperature difference is detected which is not consistent with the flow (F) measured by the flow rate measuring device (3).

19. The management method according to any one of claims 11 to 18, comprising training an expert system, for example with at least one consumption profile as a function of the measurements of the flow (F) in the duct (2) measured by the flow rate measuring device (3), for processing the information (I) in such a way as to transmit an aggregate data.

20. The method according to claim 19, comprising generating an alarm if a flow (F) in the duct (2) is measured which is not consistent with the consumption profile.

21. The management method according to any one of claims 11 to 20, wherein after sending the information (I) the control and measurement unit (1) places itself in a command standby configuration for receiving any instruction.
